# EUROPEAN PATENT SPECIFICATION

(11) **EP 2 574 529 B1**
(45) Date of publication and mention of the grant of the patent: **30.04.2014**
(21) Application number: 12181159.0
(22) Date of filing: 21.08.2012
(51) Int. Cl.: B62J 17/02, B62J 35/00, B62J 23/00

(54) **Tank shroud structure**
Tankabdeckverkleidung
Structure de blindage de reservoir

(30) Priority: 29.09.2011 JP 2011215748
(43) Date of publication of application: 03.04.2013
(73) Proprietor: Honda Motor Co., Ltd., Tokyo 107-8556 (JP)
(72) Inventor: Futamata, Takeshi, Wako-shi Saitama 351-0193 (JP); Yokoyama, Shin, Wako-shi Saitama 351-0193 (JP)
(74) Representative: Stevens, Jason Paul

(56) References cited:
- JP-A- 2002 321 676
- JP-A- 2004 210 227
- JP-A- 2010 162 990

## Description

This invention relates to a tank shroud structure which covers the lateral sides of a fuel tank of a motorcycle, and which introduces cooling air to the engine of the motorcycle. The invention relates particularly to a tank shroud structure including an outer shroud and an inner shroud which laterally overlap each other.

In a prior art structure for a tank shroud (disclosed in Japanese Patent Application Publication No. 2007-320427), each tank shroud is constructed having a dual structure formed by assembling an inner member and an outer member. The tank shrouds extend forward from the respective left and right of the fuel tank, and a running wind is thereby introduced to the engine and cools the engine.

In this known dual-structure tank shroud, the inner member is placed overlapping only the inner side of the outer member in such a way as to invisible from the outside. Accordingly, if the inner member is intended to be made large in size, the outer member also needs to be made large, to cover the inner member. As a result, the tank shroud as a whole becomes large.

On the other hand, a design in which the inner member is simply made larger than the outer member cannot be used, as the inner member would then be visible from the outside, and the inner member is intended to not be visible from the outside. Furthermore, because the inner member overlaps only the inner side of the outer member, the externally visible shape of the tank shroud is determined by the outer member. Thus, the tank shroud cannot employ a complicated structure in which the inner member influences the externally visible shape of the tank shroud. As a result, it is impossible to make the constitution of the exterior part complicated without increasing the number of parts, and it is difficult to cover the vehicle body most suitably.

It is an object of at least the preferred embodiments of this invention to solve these problems.

According to a first aspect of the present invention, there is provided a tank shroud structure which includes: a vehicle body frame for supporting an engine; a fuel tank placed above the engine, and supported by the vehicle body frame; and tank shrouds attached to the left and right sides of the fuel tank, the tank shroud structure being configured to guide a running wind into a space between the left and right tank shrouds to cool the engine, the tank shroud structure being **characterized in that** each of the tank shrouds comprises: an inner shroud located adjacent to the fuel tank; and an outer shroud located laterally outside the inner shroud, and the inner shroud is located so as to be externally visible between an upper surface of the fuel tank and an upper surface of the outer shroud in a top view.

As the inner shroud is visible from the outside between the upper surface of the fuel tank and the upper surface of the outer shroud in the top view, the inner shroud can be used as an exterior part which covers the upper surface of the fuel tank. This makes it possible to complicate the constitution of the exterior part without increasing the number of parts, and to cover the vehicle body most suitably. Furthermore, it is possible to reduce the size of the outer shroud, and accordingly to reduce the costs of replacing the outer shroud.

Preferably, the inner shroud is located along the upper side surfaces of the fuel tank, and is located between a rear end of the outer shroud and the fuel tank.

With this arrangement, the inner shroud is exposed to the outside along the upper rear portions of the outer shroud. This makes the exposed portion of the inner shroud and the outer shroud serve as the main external appearance portions of the tank shroud, and accordingly makes it possible to reduce the outer shroud in size.

Preferably, the inner shroud is attached to the fuel tank, and the outer shroud is attached to the inner shroud.

This makes it possible to reduce the number of shroud-attachment portions which are formed on the fuel tank, and accordingly to improve the ease of manufacture of the fuel tank.

Preferably, the inner shroud is formed by connecting a forward inner shroud and a rear inner shroud which are located at front and rear positions, wherein the forward inner shroud is located extending forward from the fuel tank, and reaching a lateral side of front forks supporting a front wheel, and the outer shroud is located outside the forward inner shroud and the rear inner shroud.

Forming the inner shroud as multiple front and rear parts allows the inner shroud to be easily applied as multiple small parts to the vehicle body, and also makes it possible to reinforce the connection portion of the small parts by covering the separate portions with the outer shroud.

Preferably, a space is provided between the forward inner shroud and the rear inner shroud in a side view, the outer shroud forms a running wind inlet port between the outer shroud and the forward inner shroud; guides a running wind, which is introduced via the running wind inlet port, to the space; and covers the space between the forward inner shroud and the rear inner shroud from the outside, and a rear portion of the tank shroud is closed by the outer shroud and the rear inner shroud.

With this arrangement, the running wind, which is introduced to the space between the outer shroud and the forward inner shroud via the running wind guiding port, can be supplied to the engine by being discharged rearward from the space formed between the forward inner shroud and the rear inner shroud. Accordingly, it is possible to easily form the wind guiding passage for the engine.

In a further preferred form, the tank shroud structure further comprises a radiator supported by a lower portion of the forward inner shroud, and the running wind inlet port is placed in an upper portion of the forward inner shroud, and above the radiator supporting portion of the forward inner shroud.

With this arrangement, the running wind guiding port for cooling the engine (which is different from that for the running wind to be supplied to the radiator), is formed in the same tank shroud. This makes it possible to obtain good cooling performance while reducing the number of parts.

A preferred embodiment of the invention will now be described by way of example only and with reference to the accompanying drawings, in which:
Fig. 1 is a side view of a front part of a vehicle body of the embodiment;
Fig. 2 is a front view of the vehicle body of the embodiment;
Fig. 3 is a top view of a fuel tank and tank shroud sections;
Fig. 4 is an enlarged left side view of a part of a front portion of the vehicle body;
Fig. 5 is a view corresponding to Fig. 4, with the outer shroud omitted;
Fig. 6 is a cross-sectional view taken along the line 6-6 in Fig. 4; and
Fig. 7 is a cross-sectional view taken along the line 7-7 in Fig. 4.

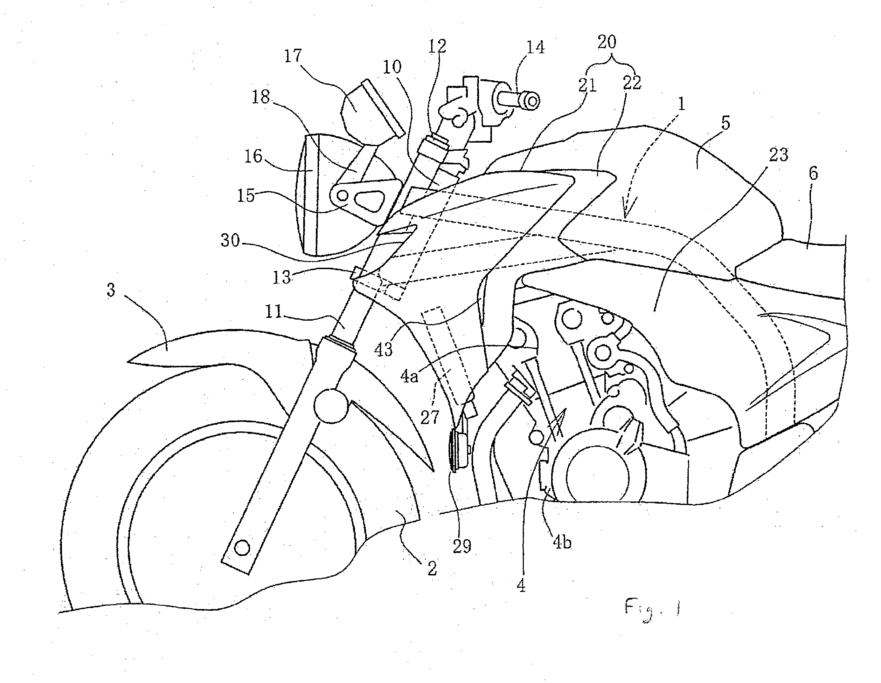

Fig. 1 is a left side view of a front part of a motorcycle of the present embodiment. In the following description, it should be noted that the directions "front", "rear", "left", "right", "upper" and "lower" (as used to refer to portions of the vehicle) are based on the state in which the vehicle is used, and specifically on a direction in which the vehicle runs in normal use.

In this motorcycle, a front wheel 2 and a rear wheel (not shown) are supported, respectively, by a front portion and a rear portion of a vehicle body frame 1. A water-cooled engine 4 is supported by a lower portion of the vehicle body frame 1. Above the engine 4, a fuel tank 5 is supported on the vehicle body frame 1. A seat 6 is placed behind the fuel tank 5. Reference numeral 3 denotes a front fender which covers an upper portion of the front wheel.

An upper portion of paired left and right front forks 11 is rotatably supported by a head pipe 10, which is provided at the front end of the vehicle body frame 1, with the assistance of a top bridge 12 and a bottom bridge 13. The front wheel 2 is supported by a lower end portion of the front forks 11, and is steered by a handlebar 14 fixed to the top bridge 12.

A headlight 16 is supported by a front portion of the head pipe 10 with the assistance of a stay 15. Meters 17 are placed above the headlight 16. The meters 17 are attached to the stay 15 with the assistance of a further stay 18.

Front side portions of the fuel tank 5 are covered with tank shrouds 20, respectively. Each tank shroud 20 is made of a synthetic resin with an appropriate rigidity, and includes an outer shroud 21 and an inner shroud 22 which overlap each other. The outer shroud 21 overlaps (or overlies) the outer side of the inner shroud 22. The inner shroud 22 overlaps (or overlies) the corresponding side surface of the fuel tank 5, and is located between the fuel tank 5 and the outer shroud 21.

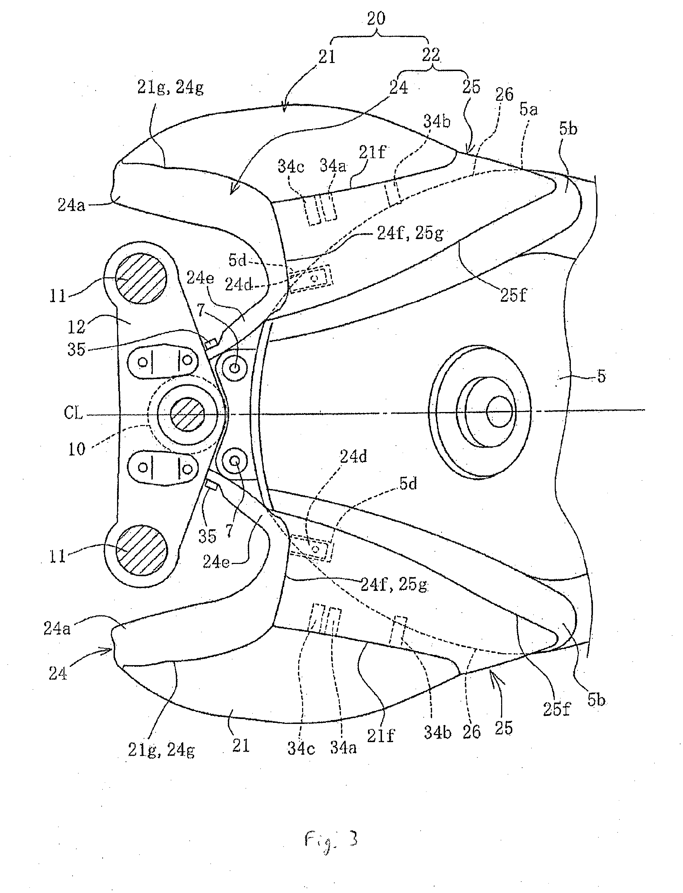

As described later, each inner shroud 22 is divided into two parts: a forward inner shroud 24 and a rear inner shroud 25 (see Fig. 3).

Reference numeral 23 denotes side cowls. Each side cowl 23 covers a lower portion of the fuel tank 5 and a lower portion of the seat 6. The lower portion of each inner shroud 22 is connected to a front portion of the corresponding side cowl 23.

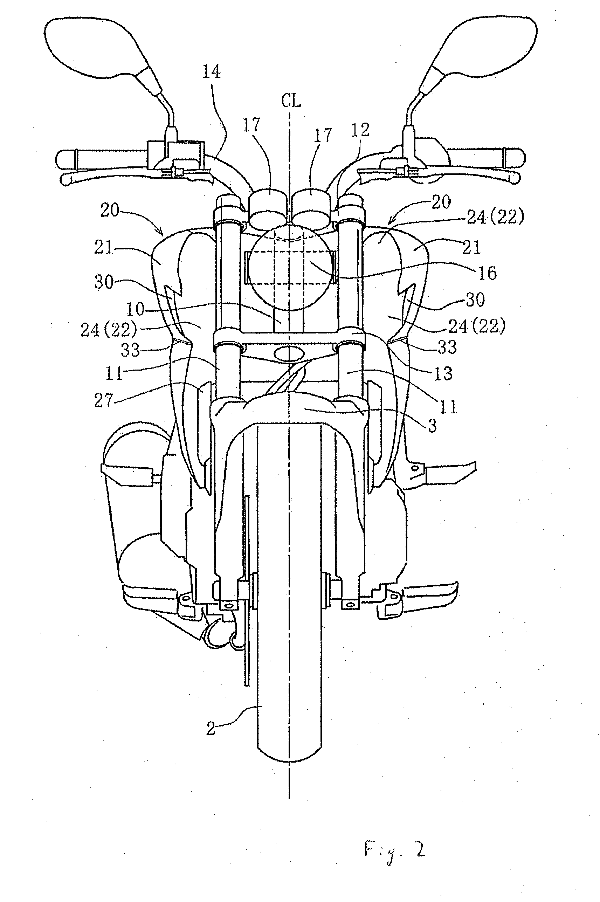

Fig. 2 is a front elevation view of the motorcycle.

Each forward inner shroud 24, which overlaps the inner side of the corresponding outer shroud 21, is situated laterally outside of the front forks 11, with a distance in between. The space between the left and right forward inner shrouds 24 forms a running wind introducing space, which is forwardly open.

A radiator 27 is placed on a lower portion of the forward inner shrouds 24, lower than the bottom bridge 13, for the purpose of cooling the engine 4. The radiator 27 is placed in an area which overlaps an upper portion of the front wheel 2 in a front view (as shown in Fig. 2), and left and right portions of the radiator 27 are supported by the respective forward inner shrouds 24. The radiator 27 is designed to be efficiently cooled by the running wind which is introduced into the space between the left and right forward inner shrouds 24.

A wind guiding port 30, formed from a forwardly open opening, is provided in an upper portion of an area of a join portion, where front edge portions of each outer shroud 21 and of the corresponding forward inner shroud 24 are joined together, the area being higher than the bottom bridge 13. This wind guiding port 30 leads to a wind guiding passage which extends longitudinally in the space between the outer shroud 21 and the forward inner shroud 24. The wind guiding port 30 is designed to cause the running wind, which enters the wind guiding passage from the wind guiding port 30, to flow rearwards.

Fig. 3 is a top view showing a section which includes the top bridge 12, the tank shrouds 20 and a front half of the fuel tank 5, in a direction generally in parallel to the axial direction of the head pipe 10. A front end portion of the fuel tank 5 is fixed to the upper surface of a front end portion of the vehicle body frame 1 (near to the head pipe 10) by use of bolts 7.

The tank shrouds 20 are provided in pairs in the left-right (lateral) direction. Each tank shroud 20 covers the corresponding lateral side of the front forks 11 I (which are shown in cross section), and the corresponding front side surface 26 of the fuel tank 5. As can be seen in the plan view in Fig. 3, the front side surface 26 constitutes an expanded portion in which the front lateral portion of the fuel tank 5 projects laterally outwardly (sidewards) to a maximal protrusion 5a.

The outside surface of each outer shroud 21 is shaped into a curved surface which curves laterally outwardly. The outer shroud 21 constitutes an external appearance member, and is smaller in size than the inner shroud 22. The outer shroud 21 is placed laterally outside the inner shroud 22, away from the fuel tank 5. Specifically, a relatively large space formed in the longitudinal direction between the outer shroud 21 and the front side surface 26 of the fuel tank 5 is occupied by the inner shroud 22. The outer shroud 21 occupies a relatively small portion which forms the maximal outward protrusion of the tank shroud 20, and which constitutes an obvious external appearance portion. The outer shroud 21 is placed over the fuel tank 5 with the inner shroud 22 interposed between the outer shroud 21 and the fuel tank 5.

The forward inner shroud 24 and the rear inner shroud 25, which constitute the inner shroud 22, are placed at forward and rear positions inside the outer shroud 21. Although a portion of the inner shroud 22 is exposed to the outside between the outer shroud 21 and the fuel tank 5, and thus is externally visible, the forward inner shroud 24 does not have a very obvious external appearance portion, because the forward inner shroud 24 is placed inside the outer shroud 21. The forward inner shroud 24 overlaps the inner side of a front portion of the outer shroud 21, and a rear end portion of the forward inner shroud 24 extends to a vicinity of the side of the front end portion of the fuel tank 5.

The rear inner shroud 25 extends rearward from the rear of the forward inner shroud 24 while curving laterally outwardly and covering the front side surface 26 of the fuel tank 5. The rear inner shroud 25 is located between the outer shroud 21 and the front side surface 26. In addition, the rear inner shroud 25 extends further rearward beyond a rear portion of the outer shroud 21, and forms a curved surface which smoothly continues the shape of the outer shroud 21.

When, as described above, the inner shroud 22 (the rear inner shroud 25) is placed between the upper surface of the fuel tank 5 and the upper surface of the outer shroud 21 in such a way as to be externally visible in a plan view, the inner shroud 22 can be used as an exterior part which covers the upper surface of the fuel tank.

In addition, the rear inner shroud 25 is located along the upper side surface of the fuel tank 5, and is located between the rear end of the outer shroud 21 and the fuel tank 5. For these reasons, the rear inner shroud 25 is exposed to the outside along an upper rear portion of the outer shroud 21, and thereby constitutes a main external appearance portion.

An inner peripheral portion 25f of the rear inner shroud 25 is in close contact with the front side surface 26 of the fuel tank 5. On the other hand, an outer portion of the rear inner shroud 25, which the outer shroud 21 overlaps, overlaps the inner side of a rear-side connection portion 21f of the outer shroud 21 located away from the front side surface 26 of the fuel tank 5. Engagement pieces 34a, 34b (detailed description of which omitted) protrude from the vicinity of the rear-side connection portion 21f of the outer shroud 21 toward the inside of the vehicle body, i.e., toward the vehicle body centreline CL. The engagement pieces 34a, 34b engage, and are thereby integrated, with engagement portions (not shown) which are provided at the inner side of the rear inner shroud 25. Various structures may be employed for these engagement portions. Although this engagement makes it easy for the outer shroud 21 to be attached to, and detached from, the rear inner shroud 25, this engagement does not necessarily have to be employed. Various known connecting means, such as screw connections, may be employed.

In a front portion of the rear inner shroud 25, a front-side connection portion 25g of the rear inner shroud 25 is closely connected to a rear-side connection portion 24f of the forward inner shroud 24. Furthermore, in the side portion of the forward inner shroud 24, a side connection portion 24g of the forward inner shroud 24 is closely connected to a front-side connection portion 21 g of the outer shroud 21.

As described later, the forward inner shroud 24 closes the interstice between the outer shroud 21 and a front portion of the fuel tank 5. Thus, the tank shroud 20 defines a space between itself and the front side surface 26 of the fuel tank 25. In this respect, the space is surrounded by the outer shroud 21, the forward inner shroud 24 and the rear inner shroud 25; the space is open at its lower part; and the space can communicate with the outside in front of the vehicle body via the wind guiding port 30 (Fig. 2).

Part of the rear inner shroud 25 overlaps the inner side of the outer shroud 21, and therefore constitutes an externally invisible portion. However, most of the remaining part of the rear inner shroud 25 is exposed to the outside between the outer shroud 21 and the front side surface 26 of the fuel tank 25, and therefore constitutes the obvious external appearance portion. For this reason, this remaining part of the rear inner shroud 25 is made as the external appearance member, for enhancing the aesthetic quality of the external appearance. As a result, the main external appearance portion of the tank shroud 20 is made up from the outer shroud 21 and the part of the rear inner shroud 25.

The left and right forward inner shrouds 24 are made to overlap the inner sides of the left and right outer shrouds 21, respectively, and are in plan view shaped like a letter U open to the front of the motorcycle. The left and right forward inner shrouds 24 integrally include: sidewall portions 24a protruding from the front end portion of the fuel tank 5 to the sides of the front forks 11, and facing each other in the lateral direction; and front wall portions 24b connected to rear portions of the sidewall portions 24a, and extending in the lateral direction, respectively.

Each sidewall portion 24a is made to overlap the inner side of the corresponding outer shroud 21 with a gap in between, and forms a space constituting a wind guiding duct, which will be described later.

Each front wall portion 24b also extends in the vertical direction, and constitutes a surface facing toward the front of the vehicle. Accordingly, the front wall portions 24b constitute wind guiding surfaces for: taking the running wind into the interstice between the left and right sidewall portions 24a; guiding the running wind W downward; and thereby cooling the radiator 27 placed on the lower portions of the forward inner shrouds 24.

An attachment piece 24d is integrally provided at a rear portion of the upper end of each front wall portion 24b. The attachment piece 24d projects rearward in such a way as to overlap the inner side of an upper portion of the front end of the rear inner shroud 25, which is connected to the front wall portion 24b from the rear. This attachment piece 24d overlaps a corresponding stay 5d which is provided at an upper portion of the front end of the fuel tank 5, and is connected to the stay 5d by use of an appropriate connection member (not shown).

Furthermore, an attachment piece 24e, projecting forwards in a curved manner, is integrally provided at a portion of the front wall portion 24d which is closer to the vehicle body centreline. An end portion of this attachment piece 24e is fastened to a portion of the vehicle body frame near the head pipe 12 by means of a bolt 35.

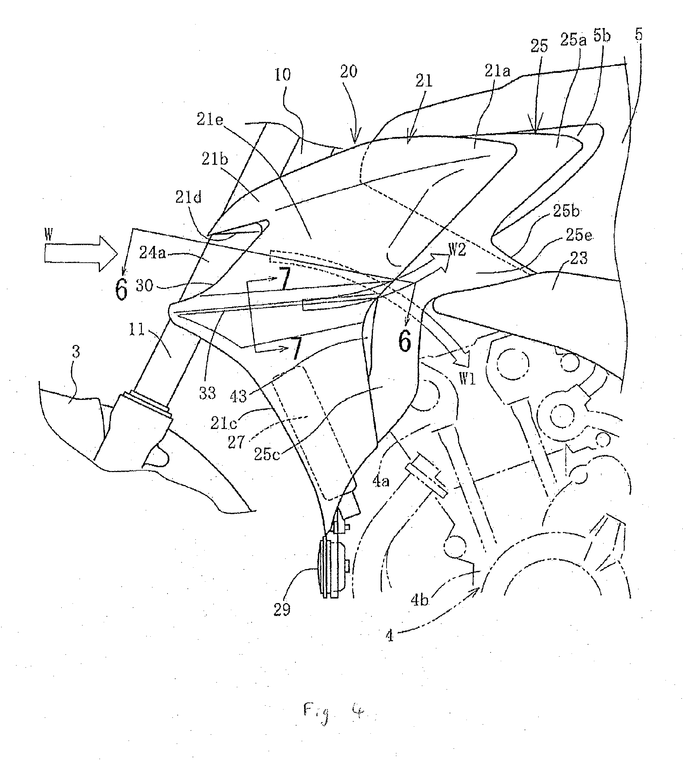

Fig. 4 is a diagram showing an enlarged view of a left part of a front portion of the vehicle body, in particular showing the tank shroud 20.

The outer shroud 21 integrally includes an upward extending portion 21 a, a downward extending portion 21c and a central portion 21e.

The upward extending portion 21 a is a generally triangular part, extending obliquely upward and rearward in a side view, and reaching the side of the front side surface 26 of the fuel tank 5.

The downward extending portion 21 c is a part extending obliquely downward and rearward from a front end portion 21 b which overlaps the corresponding side of the front forks 11, and reaching the front of a cylinder head 4a of the engine 4.

A notch-shaped portion 21 d, which is generally U-shaped in side view, is formed in the front end portion 21 b, and forms an opening of the wind guiding port 30.

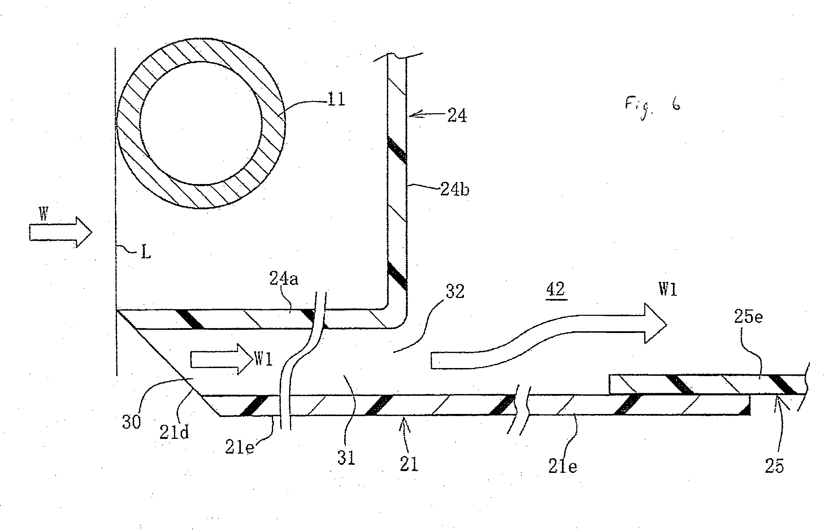

As shown in Fig. 6, the wind guiding port 30 is formed to be forwardly open, by: the flat forward inner shroud 24; and the notch-shaped portion 21d formed in the front end portion 21 b of the outer shroud 21, and constituting the oblique opening. The wind guiding port 30 communicates with a duct 31 which is formed between the outer shroud 21 and the forward inner shroud 24, and is capable of taking the running wind W from the front of the vehicle body into the duct 31.

It should be noted that a front end portion of the wind guiding port 30 (an end portion of the sidewall portion 24a) overlaps the front forks 11 in a side view. In this respect, the sidewall portion 24a is located behind the line L indicating the front end of the front forks 11. The running wind W hits the front forks 11 and is divided and changed into turbulent streams along the left and right of the front forks 11; however, this arrangement of the ports 30 makes the turbulent airstreams less likely to enter the wind guiding ports 30.

Part of the running wind W from the front enters the duct 31 via the wind guiding port 30; flows rearward as a running wind W1; reaches a wind discharging port 32 which is situated in the rear end portion of the forward inner shroud 24; leaves the wind discharging port 32 and enters a space 42 formed between the forward inner shroud 24 and the rear inner shroud 25; flows further rearward while being guided by the inner surface of the rear inner shroud 25 (a central portion 25e in Fig. 6); goes out from the rear end of the central portion 25e (or a downward extending portion 25c) of the rear inner shroud 25, as shown in Fig. 4; is guided to the vicinity of the cylinder head 4a; and cools the engine 4.

The central portion 21 e is a part which is situated behind the wind guiding port 30, and in which: the upper side of the central portion 21 e is continuous with the upward extending portion 21 a; and the lower side of the central portion 21 e is continuous with the downward extending portion 21 c. The central portion 21 e is the part which constitutes the outer-side wall surface of the duct 31 as well.

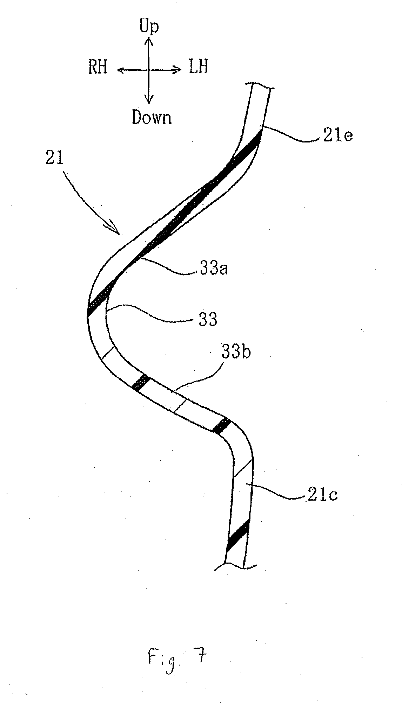

A guiding groove 33 is formed in a boundary portion between the central portion 21 e and the downward extending portion 21 c. As shown in Fig. 7, the guiding groove 33 is a recessed portion which bends inward of the vehicle body to a large extent in the boundary portion between the central portion 21 e and the downward extending portion 21c. The guiding groove 33 constitutes a groove whose cross-section is generally V-shaped, and which includes: an upper slope 33a inclining in such a way as to enter the inside of the vehicle body; and a lower slope 33b inclining in a direction opposite to the inclination direction of the upper slope 33a.

Incidentally, arrows Up, Down, RH and LH in Fig. 7 mean upward, downward, rightward and leftward, respectively.

As shown in Fig. 4, the guiding groove 33 constitutes a wind guiding passage which extends obliquely upward and rearward from under the vicinity of the wind guiding port 30 and reaches the vicinity of a front end portion of the side cowl 23. As indicated by reference numeral W2, the guiding groove 33 makes part of the running wind flow from the front side below the wind guiding port 30 toward the vicinity of the front end of the side cowl 23, which is located below a front side of the fuel tank 5. Thereby, the part of the running wind carries the heat above the engine 4 away to the rear.

In this way, the running wind W1, which flows obliquely downward inside the tank shroud 20, and the running wind W2, which flows obliquely upward outside the outer shroud 21 of the tank shroud 20, flow both inside and outside of the tank shroud 20 while intersecting each other in a side view.

It should be noted that the rear of the inner space of the outer shroud 21 is closed by the rear inner shroud 25. Accordingly, the front, upper, lateral and rear sides of the space 42, with which the duct 31 communicates via the wind discharging port 32, are closed. Specifically, the space 42 is that whose front, upper, lateral and rear sides are closed, because: as shown in Fig. 6, the front side of the space 42 is surrounded by the forward inner shroud 24 and the outer shroud 21; in the lateral side of the space 42, the outer shroud 21 and the rear inner shroud 25 overlap each other while in close contact with each other; and as shown in Fig. 3, the rear inner shroud 25 is in close contact with the front side surface 26 of the fuel tank 5.

The external appearance portion of the rear inner shroud 25 includes: an upper extending portion 25a extending further rearward from the upward extending portion 21 a of the outer shroud 21; a central extending portion 25b extending obliquely downward from the vicinity of a rear end portion of the guiding groove 33 of the outer shroud 21; and the downward extending portion 25c extending downward behind the downward extending portion 21 c of the outer shroud 21. The upward extending portion 25a enters a recessed portion 5b which is formed in the front side surface 26 of the fuel tank 5.

The end of the central extending portion 25b is connected to the front end of the side cowl 23 in a way that the central extending portion 25b is flush with the side cowl 23. The downward extending portion 25c forms an opening portion 43, which is open to the side, between a front edge portion of the downward extending portion 25c and a rear edge portion of the downward extending portion 21 c of the outer shroud 21. This opening portion 43 communicates with the space 42.

Incidentally, a design may be employed in which this opening portion 43 is used as a wind discharging port, and the running wind W1 is discharged from the duct 31 toward the rear of the tank shroud 20 via this opening portion 43. In addition, the downward extending portion 25c may constitute a guide plate for guiding the running wind W1 toward the cylinder head 4a.

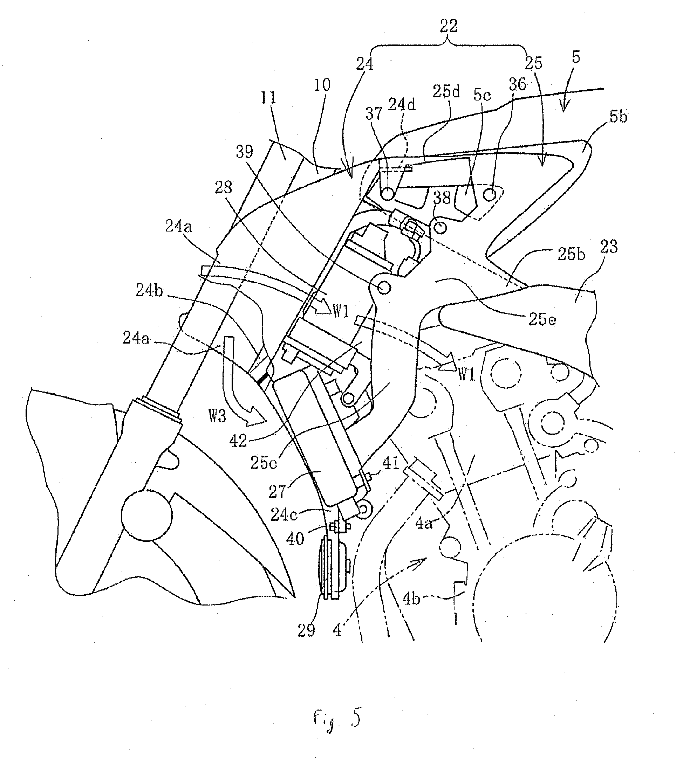

Fig. 5 is a diagram showing the left main part shown in Fig. 4, from which the outer shroud 21 is removed. As shown in this drawing, the forward inner shroud 24 and the rear inner shroud 25, which constitute the inner shroud 22, are located with a gap therebetween in the longitudinal direction. Lower portions of the forward and rear inner shrouds 24, 25 are connected together by connecting the downward extending portions 24c, 25c of the forward and rear inner shrouds 24, 25 together, with the radiator 27 interposed in between.

The forward inner shroud 24 integrally includes: the sidewall portion 24a covering the side of the front end portion of the fuel tank 5 and the side of the front fork 11; the front wall portion 24b covering the front of the front end portion of the fuel tank 5; and the downward extending portion 24c continuing from a lower portion of the front wall portion 24b, curved in a convex shape toward the rear, and extending downward. An upper end portion of the front wall portion 24b constitutes the attachment piece 24d which integrally protrudes rearward, and is connected to a stay 25d which is provided to an upper end portion of the rear inner shroud 25.

It should be noted that a part of the forward inner shroud 24 of Fig. 5 is shown in cross section, resulting from cutting away a lower portion of the forward inner shroud 24.

The running wind W, which is guided to the space between the left and right sidewall portions 24a, is blocked from flowing rearwardly by the front wall portions 24b, which face forward. Accordingly, the running wind W is turned into a running wind W3 which flows downward along the front wall portions 24b, and is guided to the radiator 27 behind the front wall portions 24b, thus cooling the radiator 27.

The forward inner shroud 24 and the rear inner shroud 25 are located with a gap therebetween in the longitudinal direction, except for their lower connected portions. Behind the front wall portions 24b, a space 42 is formed between the front wall portions 24b and the rear inner shrouds 25. A canister 28 for liquefying vaporized fuel is placed inside this space 42. The canister 28 is designed to be cooled by the running winds W1 which flow along the inner shrouds 24 constituting the inner wall surfaces of the ducts 31, respectively (see Fig. 6).

The part including the upward extending portion 25a, the central extending portion 25b and the central portion 25e, and the downward extending portion 25c of the rear inner shroud 25 is shaped almost like a band, whose width is narrower in the longitudinal direction, and which is formed longer in the vertical direction behind the canister 28. The upward extending portion 25a is attached to a fastening portion 5c inside the recessed portion 5b, which is formed in the front side surface 26 of the fuel tank 5, by use of a bolt 36. In addition, the stay 25d extends frontward from a front portion of the upper end of the upward extending portion 25a, and an engagement portion 37 is provided at the extremity of the stay 25d. The engagement piece 34a (Fig. 3) of the outer shroud 21 is made to engage with the engagement portion 37.

Furthermore, engagement portions 38, 39 are provided, respectively, in two vertically spaced areas in the vicinity of the connecting portion between the upward extending portion 25a and the central extending portion 25b. The engagement piece 34b (Fig. 3) of the outer shroud 21 engages with the engagement portion 38, and an engagement piece 34c of the outer shroud 21 similarly engages with the engagement portion 39. Thereby, the outer shroud 21 is detachably attached to the inner shroud 22 (the rear inner shroud 25) by use of the three engagement portions.

The radiator 27 is located inclined forwardly along the curved shapes of the downward extending portions 24c of the forward inner shrouds 24. A lower end portion of the radiator 27 is attached to the downward extending portions 24c by use of a bolt 40. The radiator 27 is placed in a lower area of the vehicle body, which is the lower portions of the forward inner shrouds 24. This placement contributes to the lowering the centre of gravity of the vehicle.

A horn 29 is supported by lower end portions of the respective downward extending portions 24c. The horn 29 is situated between the rear of the upper portion of the front wheel 2 and the front of a crankcase 4b of the engine 4.

The radiator 27 is also supported by the downward extending portions 25c of the respective rear inner shrouds 25. The downward extending portion 25c of each rear inner shroud 25 extends downward behind the canister 28, and then bends forwardly, as well as overlapping the back surface of the radiator 27. The downward extending portion 25c is fastened to the back surface of the radiator 27 by a bolt 41. Thereby, the radiator 27 is supported among the lower ends of the forward inner shrouds 24 and the lower ends of the rear inner shrouds 25.

When, as described above, each inner shroud 22 is placed so as to be externally visible between the upper surface of the fuel tank 5 and the upper surface of the corresponding outer shroud 21 in the top view, the inner shroud 22 can be used as the exterior part which covers the upper surface of the fuel tank. This makes it possible to complicate the constitution of the exterior part without increasing the number of parts, and to cover the vehicle body most suitably. In addition, it is possible to reduce the size of each outer shroud 21, and accordingly to reduce the costs of replacing the outer shroud 21.

In addition, each rear inner shroud 25 is placed along the upper side surfaces of the fuel tank 5, and between the rear end of the corresponding outer shroud 21 and the fuel tank 5. For this reason, the rear inner shroud 25 is exposed to the outside along the upper rear portions of the outer shroud 21. This makes the exposed portion of each rear inner shroud 25 and the corresponding outer shroud 21 become the main external appearance portions of the tank shroud 20, and accordingly makes it possible to further reduce the outer shroud 21 in size.

Furthermore, each inner shroud 22 is attached to the fuel tank 5, and the corresponding outer shroud 21 is attached to the inner shroud 22 by using the engagement pieces 34a, 34b or the like. This makes it possible to reduce the number of shroud-attachment portions which are formed on the fuel tank 5, and accordingly to improve the ease of manufacture of the fuel tank 5.

Moreover, each inner shroud 22 is formed by connecting the forward inner shroud 24 and the rear inner shroud 25 which are located in the longitudinal direction; the forward inner shroud 24 is placed, extending forward from the fuel tank 5, and reaching the corresponding side of the front forks 11; and the outer shroud 21 is placed outside the forward inner shroud 24 and the rear inner shroud 25. For these reasons, the forming of each inner shroud 22 including the multiple front and rear parts allows the inner shroud to be easily applied as multiple small parts to the vehicle body, and also to be easily detached or attached for replacement. Besides, the separate portions are covered with the outer shroud 21, which enables reinforcement of the connection portion of the small parts and enhancement of the aesthetic quality of the external appearance. Incidentally, the number of parts forming each inner shroud 22 may be varied, as long as the number is two or more.

In addition, in the side view of each inner shroud 22, a space is provided between the forward inner shroud 24 and the rear inner shroud 25; this space is covered with the corresponding outer shroud 21 from the side; the wind guiding port 30 is formed between the outer shroud 21 and the forward inner shroud 24; and the rear portion of the tank shroud 20 is closed by the outer shroud 21 and the rear inner shroud 25. For these reasons, the running wind W1, which is introduced to the space between the outer shroud 21 and the forward inner shroud 24 via the wind guiding port 30, can be discharged rearward from the space formed between the forward inner shroud 24 and the rear inner shroud 25, and can be further supplied to the vicinity of the cylinder head 4a of the engine 4 after passing out through the wind discharging port 32 which is formed in the rear of the outer shroud 21 covering part of this space. Accordingly, it is possible to easily form the wind guiding passage for the engine 4.

Furthermore, the lower portion of each forward inner shroud 24, together with the corresponding rear inner shroud 25, supports the radiator 27; and the wind guiding port 30 is provided at the forward inner shroud 24 above this supporting portion. The forming of the wind guiding port 30 for taking in the running wind W1 for cooling the engine, which is different from the running wind W3 to be supplied to the radiator 27, in the same tank shroud 20 makes it possible to form multiple wind guiding passages and to thereby obtain good cooling performance while reducing the number of parts.

## Claims

1. A motorcycle having a tank shroud structure, comprising:
a vehicle body frame for supporting an engine;
a fuel tank placed above the engine, and supported by the vehicle body frame; and
tank shrouds attached to the left and right sides of the fuel tank, the tank shroud structure being configured to guide a running wind into a space between the left and right tank shrouds to cool the engine,
wherein each of the tank shrouds (20) comprises: an inner shroud (22) located adjacent to the fuel tank (5); and an outer shroud (21) located laterally outside the inner shroud,
**characterized in that** the inner shroud (22) is located so as to be externally visible between an upper surface of the fuel tank (5) and an upper surface of the outer shroud (21) in a top view.

2. The motorcycle according to claim 1, wherein
the inner shroud (22) is located along the upper side surfaces of the fuel tank (5), and is located between a rear end of the outer shroud (21) and the fuel tank (5).

3. The motorcycle according to claim 1 or claim 2, wherein
the inner shroud (22) is attached to the fuel tank (5), and
the outer shroud (21) is attached to the inner shroud (22).

4. The motorcycle according to any one of claims 1 to 3, wherein
the inner shroud (22) is formed by connecting a forward inner shroud (24) and a rear inner shroud (25) which are located at front and rear positions,
wherein the forward inner shroud (24) is located extending forward from the fuel tank (5) to reach a lateral side of front forks (11) supporting a front wheel, and
the outer shroud (21) is located outside the forward inner shroud (24) and the rear inner shroud (25).

5. The motorcycle according to any one claims 1 to 4, wherein
a space (42) is provided between the forward inner shroud (24) and the rear inner shroud (25) in a side view,
the outer shroud (21) forms a running wind inlet port (30) between the outer shroud (21) and the forward inner shroud (24); guides a running wind, which is introduced via the running wind inlet port (30), to the space (42); and covers the space (42) between the forward inner shroud (24) and the rear inner shroud (25) from the outside, and
a rear portion of the tank shroud (20) is closed by the outer shroud (21) and the rear inner shroud (25).

6. The motorcycle according to claim 5, further comprising a radiator (27) supported by a lower portion of the forward inner shroud (24),
and wherein the running wind inlet port (30) is placed in an upper portion of the forward inner shroud (24), and above the radiator supporting portion of the forward inner shroud.

## Patentansprüche

1. Motorrad, das eine Tankverkleidungsstruktur hat, die Folgendes aufweist:
einen Fahrzeugkarosserierahmen zum Tragen einer Kraftmaschine,
einen Kraftstofftank, der oberhalb der Kraftmaschine platziert ist und von dem Fahrzeugkarosserierahmen getragen wird, und
Tankverkleidungen, die an der linken und rechten Seite des Kraftstofftanks befestigt sind, wobei die Tankverkleidungsstruktur konfiguriert ist, um einen Fahrwind in einen Raum zwischen der linken und der rechten Tankverkleidung zu führen, um die Kraftmaschine zu kühlen,
wobei jede der Tankverkleidungen (20) Folgendes aufweist: eine innere Verkleidung (22), die benachbart zu dem Kraftstofftank (5) liegt, und eine äußere Verkleidung (21), die seitlich außerhalb der inneren Verkleidung liegt,
**dadurch gekennzeichnet, dass** die innere Verkleidung (22) derart lokalisiert ist, dass sie außerhalb zwischen einer oberen Oberfläche des Kraftstofftanks (5) und einer oberen Oberfläche der äußeren Verkleidung (21) in einer Draufsicht sichtbar ist.

2. Motorrad nach Anspruch 1, wobei
die innere Verkleidung (22) entlang der oberen Seitenoberflächen des Kraftstofftanks (5) und zwischen einem hinteren Ende der äußeren Verkleidung (21) und dem Kraftstofftank (5) liegt.

3. Motorrad nach Anspruch 1 oder 2, wobei
die innere Verkleidung (22) an dem Kraftstofftank (5) befestigt ist, und
die äußere Verkleidung (21) an der inneren Verkleidung (22) befestigt ist.

4. Motorrad nach einem der Ansprüche 1 bis 3, wobei
die innere Verkleidung (22) durch Verbinden einer vorderen inneren Verkleidung (24) und einer hinteren inneren Verkleidung (25), die an einer vorderen und einer hinteren Position liegen, ausgebildet ist,
wobei die vordere innere Verkleidung (24) sich von dem Kraftstofftank (5) vorwärts erstreckend liegt, um eine seitliche Seite der vorderen Gabel (11), die ein Vorderrad trägt, zu erreichen, und
wobei die äußere Verkleidung (21) außerhalb der vorderen inneren Verkleidung (24) und der hinteren inneren Verkleidung (25) liegt.

5. Motorrad nach einem der Ansprüche 1 bis 4, wobei
ein Raum (42) zwischen der vorderen inneren Verkleidung (24) und der hinteren inneren Verkleidung (25) in einer Seitenansicht bereitgestellt ist,
die äußere Verkleidung (21) eine Fahrtwindeinlassöffnung (30) zwischen der äußeren Verkleidung (21) und der der vorderen inneren Verkleidung (24) bildet, einen Fahrtwind führt, der über die Fahrtwindeinlassöffnung (30) in den Raum (42) eingeführt wird, und den Raum (42) zwischen der vorderen inneren Verkleidung (24) und der hinteren inneren Verkleidung (25) von der Außenseite abdeckt, und
ein hinterer Teil der Tankverkleidung (20) durch die äußere Verkleidung (21) und die hintere innere Verkleidung (25) geschlossen ist.

6. Motorrad nach Anspruch 5, das ferner einen Kühler (27) aufweist, der von einem unteren Teil der vorderen inneren Verkleidung (24) getragen wird,
und wobei die Fahrtwindeinlassöffnung (30) in einem oberen Teil der vorderen inneren Verkleidung (24) und oberhalb des den Kühler tragenden Teils der vorderen inneren Verkleidung platziert ist.

## Revendications

1. Motocyclette ayant une structure de blindage de
réservoir, comprenant :
une ossature de caisse du véhicule pour supporter un moteur ;
un réservoir de carburant placé au-dessus du moteur et supporté par l'ossature de caisse du véhicule ; et
des blindages de réservoir fixés aux côtés gauche et droit du réservoir de carburant, la structure de blindage de réservoir étant configurée pour guider un courant d'air circulant dans un espace compris entre les blindages de réservoir gauche et droit afin de refroidir le moteur,
dans laquelle chacun des blindages de réservoir (20) comprend un blindage interne (22) adjacent au réservoir de carburant (5) ; et un blindage externe (21) situé latéralement à l'extérieur du blindage interne,
**caractérisée en ce que** le blindage interne (22) est situé de manière à être visible extérieurement entre une surface supérieure du réservoir de carburant (5) et une surface supérieure du blindage externe (21) en vue de dessus.

2. Motocyclette selon la revendication 1, dans laquelle :
le blindage interne (22) est situé le long des surfaces latérales supérieures du réservoir de carburant (5) et est disposé entre une extrémité arrière du blindage externe (21) et le réservoir de carburant (5).

3. Motocyclette selon la revendication 1 ou la revendication 2, dans laquelle :
le blindage interne (22) est fixé au réservoir de carburant (5) et
le blindage externe (21) est fixé au blindage interne (22).

4. Motocyclette selon l'une quelconque des revendications 1 à 3, dans laquelle :
le blindage interne (22) est formé en raccordant un blindage interne avant (24) et un blindage interne arrière (25) qui sont disposés dans des positions avant et arrière,
dans laquelle le blindage interne avant (24) est situé de manière à s'étendre vers l'avant depuis le réservoir de carburant (5) afin d'atteindre un côté latéral de fourches avant (11) supportant une roue avant, et
le blindage externe (21) est situé à l'extérieur du blindage interne avant (24) et du blindage interne arrière (25).

5. Motocyclette selon l'une quelconque des revendications 1 à 4, dans laquelle :
un espacement (42) est ménagé entre le blindage interne avant (24) et le blindage interne arrière (25) en vue latérale,
le blindage externe (21) forme un orifice d'entrée (30) pour un courant d'air circulant entre le blindage externe (21) et le blindage interne avant (24) ; guide un courant d'air circulant qui est introduit via l'orifice d'entrée de courant d'air circulant (30) dans l'espace (42) ; et recouvre l'espace (42) entre le blindage interne avant (24) et le blindage interne arrière (25) de l'extérieur, et
une partie arrière du blindage de réservoir (20) est fermée par le blindage externe (21) et le blindage interne arrière (25).

6. Motocyclette selon la revendication 5, comprenant en outre un radiateur (27) supporté par une portion inférieure du blindage interne avant (24), et
dans laquelle l'orifice d'entrée de courant d'air circulant (30) est placé dans une portion supérieure du blindage interne avant (24) et au-dessus de la portion de support du radiateur du blindage interne avant.
